# EUROPEAN PATENT SPECIFICATION

(11) **EP 2 698 518 B1**
(45) Date of publication and mention of the grant of the patent: **17.05.2017**
(21) Application number: 11796600.2
(22) Date of filing: 13.04.2011
(51) Int. Cl.: F02D 13/02, F02B 37/24, F02D 41/00, F02M 26/01

(54) **INTERNAL COMBUSTION ENGINE CONTROL APPARATUS**
STEUERVORRICHTUNG FÜR EINEN VERBRENNUNGSMOTOR
APPAREIL DE COMMANDE DE MOTEUR À COMBUSTION INTERNE

(43) Date of publication of application: 19.02.2014
(73) Proprietor: Toyota Jidosha Kabushiki Kaisha, Toyota-shi, Aichi 471-8571 (JP)
(72) Inventor: IWATA, Kazuyasu, Toyota-shi, Aichi-ken, 471-8571 (JP); YANASE, Yoshinori, Toyota-shi, Aichi-ken, 471-8571 (JP); ITO, Katsuhiro, Toyota-shi, Aichi-ken, 471-8571 (JP); KOGO, Tomoyuki, Toyota-shi, Aichi-ken, 471-8571 (JP); OGAWA, Takashi, Toyota-shi, Aichi-ken, 471-8571 (JP)
(74) Representative: Intès, Didier Gérard André
(86) International application number: PCT/JP2011/059173
(87) International publication number: WO 2012/140751

(56) References cited:
- EP-A2- 1 260 684
- EP-A2- 1 944 497
- WO-A1-99/42718
- WO-A1-2006/076954
- WO-A2-2009/148917
- JP-A- 2003 520 314
- JP-A- 2004 293 341
- JP-A- 2005 105 954
- JP-A- 2005 539 172
- US-A1- 2005 061 303
- US-A1- 2006 086 546

## Description

### TECHNICAL FIELD

The present invention relates to a control device of an internal combustion engine.

### BACKGROUND ART

In internal combustion engines (particularly, diesel engine), there is known an art of an exhaust gas recirculation (EGR) in which a portion of an exhaust gas is recirculated back to a combustion chamber in order to reduce the amount of nitrogen oxide (NOx) exhausted from the combustion chamber. As a method of implementing EGR, there is well known a technique of providing an EGR passage through which an exhaust passage and an intake passage of an internal combustion engine communicate with each other and introducing a portion of an exhaust gas that flows through the exhaust passage into the intake passage (hereinafter, the above technique is referred to as external EGR).

As another implementation method of EGR, there is a technique of utilizing a burned gas in the previous cycle (hereinafter, this technique is referred to as internal EGR). As an art of the internal combustion engine that performs the internal EGR, Patent Document 1 discloses a technique of opening an exhaust valve in the intake stroke of the internal combustion engine to recirculate a portion of the burned gas (exhaust gas) back to the combustion chamber. Patent Document 2 discloses a technique of varying a negative valve overlap period during which the intake valve and the exhaust valve of the internal combustion engine are both closed to thereby control the internal EGR amount.

### PRIOR ART DOCUMENTS

### PATENT DOCUMENTS

PATENT DOCUMENT 1: Japanese Patent Application Publication No. 2006-144713
PATENT DOCUMENT 2: Japanese Patent Application Publication No. 2007-303355

US 2005/0061303 A1 shows a control device of an internal combustion engine according to the preamble of claim 1.

According to US 2006/0086546 A1, engine valves may be selectively opened to reduce pumping losses associated with the back-driving of the engine.

### SUMMARY OF THE INVENTION

### PROBLEMS TO BE SOLVED BY THE INVENTION

The amount of exhaust gas introduced into the combustion chamber by the internal EGR changes due to the pressure balance between the intake side and the exhaust side of the internal combustion engine. Particularly, exhaust pulsation in which the pressure on the exhaust side varies periodically takes place in the internal combustion engine. Thus, if the internal EGR control is performed without considering the pressure difference between the intake side and the exhaust side, the real recirculation amount of exhaust gas may greatly differ from the target recirculation amount.

In an operating range in which the execution of the internal EGR is not requested, it is desirable that the burned gas is exhausted to the exhaust side from the combustion chamber as much as possible. In such an operating range of the internal combustion engine, the exhaust valve is opened at a timing when the pressure on the exhaust side is lower than the pressure on the intake side due to exhaust pulsation, so that the burned gas in the combustion chamber can be scavenged and an increased amount of intake air can be introduced. Similarly, in the above scavenging control, if the exhaust valve is opened without considering the pressure difference between the intake side and the exhaust side, the sufficient scavenging effect may not be obtained.

The present invention was made from the above viewpoints, and has an object of providing a control device of an internal combustion engine capable of appropriately controlling the amount of exhaust gas introduced into the combustion chamber by the internal EGR.

### MEANS FOR SOLVING THE PROBLEMS

In order to achieve the above object, a control device of an internal combustion engine of the present invention is defined in claim 1.

By having the variable valve means, the phase changing means and the exhaust-system capacity changing means, it is possible to appropriately control the amount of exhaust gas introduced into the combustion chamber by the internal EGR, and the control device of the internal combustion engine of the present invention is structured so that the variable valve means executes a control to open the exhaust vale of the internal combustion engine in the intake stroke besides the valve opening operation in the exhaust stroke and to introduce, into the internal combustion chamber, a portion of the exhaust gas flowing out to an exhaust side of the internal combustion engine from the combustion chamber, and the exhaust-system capacity changing means reduces the exhaust-system capacity in a case where an amount of exhaust gas introduced into the combustion chamber by the control of the variable valve means is smaller than a target introduction amount.

It is known that exhaust pulsation is more conspicuous as the exhaust-system capacity becomes smaller, that is, the pressure on the exhaust side becomes higher. Thus, with the above structure, by reducing the exhaust-system capacity of the internal combustion engine and thereby raising the pressure on the exhaust side, it is possible to increase the amount of exhaust gas introduced into the combustion chamber without degrading fuel economy. It is thus possible to appropriately control the amount of exhaust gas introduced into the combustion chamber by the internal EGR.

Also, the control device of the internal combustion engine of the present invention may be structured so that, in a case where the amount of exhaust gas introduced the combustion chamber after the control of the exhaust-system capacity changing means is executed is smaller than the target introduction amount, the phase changing means executes a control to advance phases of opening and closing the exhaust valve.

With the above structure, the opening phase of the exhaust valve is advanced to raise the pressure on the exhaust side and to confine the exhaust gas in the combustion chamber, so that the amount of exhaust gas introduced into the combustion chamber can be increased without suppressing degradation of fuel economy. It is thus possible to appropriately control the amount of exhaust gas introduced into the combustion chamber by the internal EGR.

Further, the control device of the internal combustion engine of the present invention may be structured so that, in a case where the amount of exhaust gas introduced into the combustion chamber after the control of the phase changing means is executed is smaller than the target introduction amount, the supercharging efficiency control means executes a control to improve the supercharging efficiency of the supercharger.

With the above structure, the supercharging efficiency of the supercharger is improved to raise the pressure on the exhaust side, and the amount of exhaust gas introduced into the combustion chamber can be increased It is thus possible to appropriately control the amount of exhaust gas introduced into the combustion chamber by the internal EGR.

Furthermore, the control device of the internal combustion engine of the present invention may be structured so that, that in a case where the amount of exhaust gas introduced into the combustion chamber by the control of the variable valve means exceeds the target introduction amount, the supercharging efficiency control means executes a control to reduce the supercharging efficiency of the supercharger.

With the above structure, the supercharging efficiency of the supercharger is reduced to lower the pressure on the exhaust side, and the amount of exhaust gas introduced into the combustion chamber can be reduced. It is thus possible to appropriately control the amount of exhaust gas introduced into the combustion chamber by the internal EGR.

Also, the control device of the internal combustion engine of the present invention may be structured so that that the phase changing means executes a control to retard a closing phase of the exhaust valve in an exhaust stroke of the internal combustion engine beyond a phase of a top dead center of a piston, and the exhaust-system capacity changing means executes a control to reduce the exhaust-system capacity in accordance with an operating condition of the internal combustion engine, and after the control of the phase changing means and the exhaust-system capacity changing means are executed, the variable valve means executes a control opens the exhaust valve of the internal combustion engine in an intake stroke besides a valve opening operation in an intake stroke and to discharge exhaust gas that remains in the combustion chamber of the internal combustion chamber to the exhaust side.

With the above structure, since the exhaust valve can be opened when the pressure on the exhaust side becomes lower than the pressure on the intake side in an operating range in which it is not requested to execute the internal EGR, it is possible to scavenge the burned gas in the combustion chamber appropriately.

Further, the control device of the internal combustion engine of the present invention may be structured so that, that in a case where the supercharging pressure of the supercharger after the control of the phase changing means and the control of the exhaust-system capacity changing means are executed is larger than a target introduction amount by not less than a predetermined value, the supercharging efficiency control means executes a control to reduce the supercharging efficiency of the supercharger.

With the above structure, by reducing the supercharging efficiency of the supercharger to thus reduce the pressure on the exhaust side in a case where the supercharging pressure of the supercharger is higher than the target supercharging pressure by not less than the predetermined value, it is possible to more frequently realize a state in which the pressure on the exhaust side is lower than the pressure on the intake side. Thus, since the burned gas in the combustion chamber can be scavenged appropriately, it is possible to control the amount of exhaust gas introduced into the combustion chamber by the internal EGR appropriately.

Furthermore, the control device of the internal combustion engine of the present invention may be structured to further comprise an exhaust gas recirculation passage that communicates an exhaust side at an upstream side of the supercharger and an intake side with each other and recirculates a portion of exhaust gas back to an intake passage; and a shut-off valve provided in the vicinity of an exhaust gas inlet portion of the exhaust gas recirculation passage, the exhaust-system capacity changing means closing the shut-off valve to reduce the exhaust-system capacity.

With the above structure, the exhaust-system capacity of the internal combustion chamber can be reduced by the capacity of the exhaust gas recirculation passage, and the pressure on the exhaust side can be controlled appropriately. It is thus possible to control the amount of exhaust gas introduced into the combustion chamber by the internal EGR appropriately.

### EFFECTS OF THE INVENTION

According to the present invention, it is possible to appropriately control the amount of exhaust gas introduced into the combustion chamber by the internal EGR.

### BRIEF DESCRIPTION OF THE DRAWINGS

FIG. 1 is a diagram that illustrates an exemplary structure of an engine system in accordance with an embodiment;
FIG. 2 is a sectional view of an exemplary structure of a cylinder of an engine of an embodiment;
FIG. 3 illustrates an exemplary pressure behavior and an exemplary valve lift on an exhaust side of the engine;
FIG. 4 is a flowchart of an exemplary process of an engine ECU;
FIG. 5 illustrates exemplary pressure behaviors and exemplary valve lifts on the intake side and the exhaust side of the engine; and
FIG. 6 is a flowchart of en exemplary process of an engine ECU.

### MODES FOR CARRYING OUT THE INVENTION

Now, a description is given of modes for carrying out the invention with reference to the drawings.

### Embodiment 1

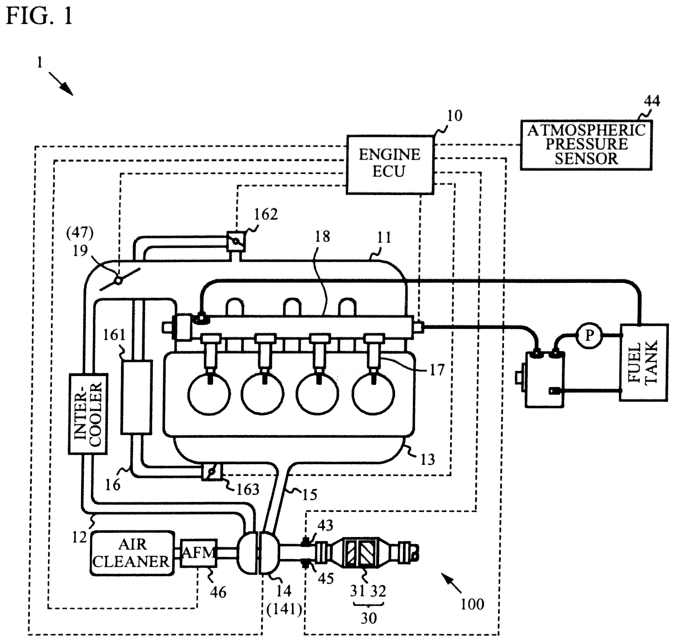

Embodiments of the present invention are described by referring to the drawings. FIG. 1 is a diagram of a structure of an engine system 1 in which a control device of an internal combustion engine is installed. FIG. 1 illustrates only a structure of a part of the engine.

An engine system 1 illustrated in FIG. 1 is equipped with an engine 100, which is a power source, and an engine ECU (Electronic Control Unit) 10, which generally controls the operation of the engine 100. Further, the engine system 1 is equipped with a turbocharger 14 on the downstream side of an exhaust manifold 13 of the engine 100, and is equipped with a variable nozzle vane mechanism 141, which controls the supercharging efficiency of the turbocharger 14. The engine system 1 is equipped with a hydraulic VVT mechanism 27, which changes the valve timing of an exhaust valve 23 of the engine 100. The engine system 1 is equipped with a shut-off valve 163 in an exhaust gas inlet portion of an EGR passage 16 of the engine 100. The engine system 1 is equipped with a water temperature sensor 42, which detects the cooling water temperature of the engine 100, an exhaust temperature sensor 43, which detects the exhaust gas temperature of the engine 100, and an atmospheric pressure sensor 44, which detects the atmospheric pressure of the outside.

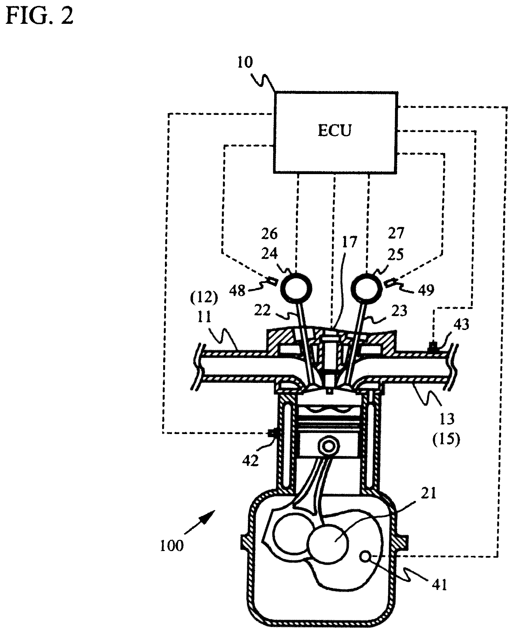

FIG. 2 is a sectional view of a structure of one cylinder of the engine 100 in accordance with the embodiment. The engine 100 is a four-cylinder diesel engine installed in a vehicle, and each cylinder is equipped with a piston that defines a combustion chamber. The piston of each combustion chamber is slidably fitted into the cylinder, and is joined, through a connecting rod, to a crankshaft 21, which is an output shaft member.

The engine ECU 10 determines a fuel injection amount and a fuel injection timing on the basis of information such as the intake air amount from an airflow meter 46 and the position of the piston from a crank angle sensor 41, and sends signals to the injector 17. The injector 17 injects fuel into the combustion chamber by the specified fuel injection amount at the specified injection timing. The fuel injected by the injector 17 is atomized and is formed into an air-fuel mixture with intake air that flows into the combustion chamber as the intake valve is opened. The air-fuel mixture is compressed in the combustion chamber by the piston ascending motion and is ignited and burned. Thus, the air-fuel mixture expands the combustion chamber, and moves the piston downwards. The descending motion is changed to the axial motion of the crankshaft 21 via the connecting rod, and the engine 100 obtains power. In this case, the engine 100 is not limited to four cylinders but may be a multi-cylinder diesel engine.

Although the engine 100 is preferably a diesel engine that uses light oil as fuel, the engine 100 is not limited thereto. The engine 100 is an exemplary structure of the internal combustion engine of the present invention.

The crank angle sensor 41 is provided in the vicinity of the crankshaft 21. The crank angle sensor 41 is configured to detect the rotation angle of the crankshaft 21 and send the result of detection to the engine ECU 10. Thus, the engine ECU 10 obtains information about the crank angle such as the rotation number and the angular velocity of the crankshaft 21 in operation. The engine ECU 10 calculates the engine speed and the engine torque on the basis of the obtained rotation speed and the angular velocity of the crankshaft 21, and recognizes the power of the engine 100.

A water jacket in which cooling water is circulated is provided in the periphery of the combustion chamber of the engine 100, and is provided with the water temperature sensor 42 for measuring the temperature of the cooling water. The water temperature sensor 42 detects the temperature of the cooling water and sends the result of detection to the engine ECU 10. Thus, the engine ECU 10 recognizes the temperature of the cooling water of the engine 100. In this case, the water temperature sensor 42 may be provided in an arbitrary position where the temperature of the cooling water circulated in the engine 100 can be detected. Instead of the detection result of the water temperature sensor 42, the engine ECU 10 may recognize the cooling water temperature from another temperature detected such as the temperature of exhaust gas, or may estimate the cooling water temperature from the operation history of the engine 100.

Each chamber is provided with a plurality of intake valves and a plurality of exhaust valves. FIG. 2 illustrates one of the intake valves and one of the exhaust valves. An intake valve 22 is arranged in each intake port of the combustion chamber, and an intake camshaft 24 for opening and closing the intake valve 22 is arranged. Further, an exhaust valve 23 is arranged in each exhaust port of the combustion chamber, and an exhaust camshaft 25 for opening and closing the exhaust value 23 is arranged.

The intake valve 22 and the exhaust valve 23 are opened and closed by rotations of the intake camshaft 24 and the exhaust camshaft 25 to which the rotation of the crankshaft 21 is transferred via a joint mechanism (for example, a timing belt or a timing chain), so that the intake port and the exhaust port communicate with or are isolated from the combustion chamber. The phases of the intake valve 22 and the exhaust valve 23 are represented with reference to the crank angle.

The intake camshaft 24 has an electric VVT mechanism 26, which is a variable valve timing mechanism (hereinafter, referred to as VVT mechanism). The electric VVT mechanism 26 rotates the intake camshaft 24 by an electric motor by instructions from the engine ECU 10. Thus, the rotational phase of the intake camshaft 24 with respect to the crankshaft 21 is changed, and the valve, timing of the intake valve 22 is thus changed. In this case, the rotational phase of the intake camshaft 24 is detected by an intake cam angle sensor 48, and is output to the engine ECU 10. Thus, the engine ECU 10 can obtain the phase of the intake camshaft 24 and the phase of the intake valve 22. The phase of the intake camshaft 24 is represented with reference to the crank angle.

The exhaust camshaft 25 has a hydraulic VVT mechanism 27. The hydraulic VVT mechanism 27 rotates the exhaust camshaft 25 by an oil controlled valve (OCV) by instructions of the engine ECU 10. Thus, the rotational phase of the exhaust camshaft 25 with respect to the crankshaft 21 is changed, and the valve timing of the exhaust valve 23 is changed. In this case, the rotational phase of the exhaust camshaft 25 is detected by an exhaust cam angle sensor 49, and is output to the engine ECU 10. Thus, the engine ECU 10 can obtain the phase of the exhaust camshaft 25 and the phase of the exhaust valve 23. The phase of the exhaust camshaft 25 is represented with reference to the crank angle. Further, the hydraulic VVT mechanism 27 adjusts OCV by instructions from the engine ECU 10 to thus open the exhaust valve 23 in the intake stroke of the engine 100. Although the hydraulic VVT mechanism 27 of the present embodiment is of hydraulic type, it may be of electric type like the intake camshaft 24.

The hydraulic VVT mechanism 27 is an exemplary structure of variable valve timing means and variable phase changing means of the present invention.

Turning back to FIG. 1, the engine 100 is equipped with a common rail type fuel injection system composed of the injector 17, a common rail 18, a low-pressure fuel and a high-pressure fuel pump. Fuel in a fuel tank sucked by the low-pressure fuel pump is discharged to and stored in the common rail 18 at high pressure by the high-pressure fuel pump.

The common rail 18 is a container that stores high pressure fuel to be supplied to the injector 17. Fuel supplied by the high-pressure fuel pump at high pressure is accumulated in the common rail 18 until a pressure necessary for injection is available, and is supplied to the injector 17 attached to each combustion chamber via a high-pressure pipe. The common rail 18 is provided with a rail pressure sensor and a decompression valve. The engine ECU 10 instructs the decompression valve to open in a case where the fuel pressure in the common rail 18 indicated by the rail pressure sensor exceeds a specified value. Fuel is discharged by the decompression valve so that the common rail pressure is adjusted so as to be always equal to or lower than the specified value. Fuel discharged by the decompression valve returns to the fuel tank via a relief pipe.

The injector 17 is arranged to each combustion chamber. Fuel supplied from the common rail 18 via the high-pressure pipe is injected in the combustion chamber in the engine cylinder by the injector 17 in response to the instructions by the engine ECU 10. The engine ECU 10 determines the fuel injection amount and the injection timing on the basis of information such as the intake air amount from the airflow meter 46 and the piston position from the crank angle sensor 41, and sends a signal to the injector 17. In accordance with the signal from the engine ECU 10, the injector 17 injects fuel into the fuel chamber at high pressure by the specified fuel injection amount at the specified injection timing. Leakage fuel of the injector 17 is returned to the fuel tank through the relief pipe. In this case, the injector 17 may be attached in an arbitrary position based on the specifications of the engine 100.

An intake manifold 11 is connected to each combustion chamber of the engine 100 so as to communicate therewith. The intake manifold 11 is connected, through an intake passage 12, to an air cleaner via the airflow meter 46, a diesel throttle 19, an intercooler, and a compressor of the turbocharger 14, and introduces intake air from the outside of the engine 100 into each combustion chamber.

A throttle position sensor 47 is provided to the diesel throttle 19. The airflow meter 46 and the throttle position sensor 47 detect the amount of intake air that passes through the intake passage 12 and the valve opening of the diesel throttle 19, respectively, and sends the detection results to the engine ECU 10. The engine ECU 10 recognizes the amount of intake air introduced into the intake manifold 11 on the basis of the detection results sent, and adjusts the valve opening of the diesel throttle 19 so that intake air needed to operate the engine 100 can be introduced into the combustion chamber.

Although the diesel throttle 19 is preferably of throttle-by-wire type using a stepping motor, another arbitrary mechanism capable of changing the valve opening of the diesel throttle 19 may be applied.

The exhaust manifold 13 is connected to each combustion chamber of the engine 100 so as to communicate therewith. The exhaust manifold 13 is joined, through an exhaust passage 15, to an exhaust emission control device 30 via an exhaust turbine of the turbocharger 14, and discharges exhaust gas after burning to the outside.

The turbocharger 14 uses the kinetic energy of exhaust gas to rotate the exhaust turbine, compresses the intake air passing through the air cleaner and supplies the compressed intake air to the intercooler. The compressed intake air is cooled by the intercooler, and is introduced into the intake manifold 11.

The turbocharger 14 is a variable nozzle turbocharger (hereinafter, abbreviated as VNT), and a variable nozzle vane mechanism 141 is provided on the exhaust turbine side thereof. By adjusting the opening of the variable nozzle vane mechanism 141, the angle at which the exhaust gas flows in turbine impeller vanes is controlled to adjust the supercharging pressure of the intake air introduced into the intake manifold. For example, when the opening of the variable nozzle vane mechanism 141 is reduced, a larger amount of exhaust gas flows in the turbine impeller vanes, so that the ratio of using the energy of exhaust gas can be increased and the supercharging efficiency can be improved. When the opening of the variable nozzle vane mechanism 141 is increased, a smaller amount of exhaust gas flows in the turbine impeller vanes, whereby the ratio of using the energy of exhaust gas is decreased and the supercharging efficiency is degraded. In this case, the turbocharger 14 is not limited to VNT but may be configured to adjust the supercharging pressure by a waste gate (control of efficiency of using the energy of exhaust gas).

The turbocharger 14 is an exemplary structure of a supercharger of the present invention. The variable nozzle vane mechanism 141 is an exemplary structure of supercharging efficiency control means of the present invention.

The exhaust emission control device 30 cleans the exhaust gas of the engine 100, and has a cleaning catalyst 31 that removes NOx, HC and CO in the exhaust gas, and a DPF 32 that captures particle materials (PM) such as soot. In this case, DPNR (Diesel Particulate NOx Reduction system) in which NOx absorber catalyst is incorporated into a particulate filter may be applied to the exhaust emission control device 30.

To the exhaust passage 15 at the upstream side of the exhaust emission control device 30, there are provided an A/F sensor 45 that detects the air-fuel ratio of the engine 100 and the exhaust temperature sensor 43 that detects the temperature of exhaust gas. Thus, the engine ECU 10 is capable of recognizing the air-fuel ratio of the engine 100 and the exhaust gas temperature under various load conditions.

The exhaust manifold 13 communicates with the intake manifold 11 through the EGR passage 16. The exhaust gas that flows into the EGR passage 16 is cooled by the EGR cooler 161, and moves to the intake manifold 11 while the flow rate of the exhaust gas is adjusted by an EGR valve 162. Then, the exhaust gas is introduced into the combustion chamber along with the intake air. The EGR valve 162 appropriately adjusts the amount of recirculation of the exhaust gas back to the intake manifold 11 by adjusting the valve opening in accordance with an instruction by the engine ECU 10. The EGR passage 16, the EGR cooler 161 and the EGR valve 162 function as an external EGR that recirculates a portion of the exhaust gas passing through the exhaust manifold 13 back to the intake manifold 11.

The EGR passage 16 is an exemplary structure of the exhaust gas recirculation passage of the present invention.

The shut-off valve 163 is provided in a connecting portion between the exhaust manifold 13 and the EGR passage 16, that is, an exhaust gas inlet portion of the EGR passage 16. The shut-off valve 163 is configured to isolate the EGR passage 16 from the exhaust manifold 13 in accordance with an instruction by the engine ECU 10. By isolating the EGR passage 16 from the exhaust manifold 13 by the shut-off valve 163, it is possible to reduce the capacity of the exhaust system of the engine 100 (the sum of at least the capacity of the exhaust manifold 13 and that of the EGR passage 16) by the capacity of the EGR passage 16. In contrast, by opening the shut-off valve 163 to open the EGR passage 16, it is possible to increase the capacity of the exhaust system of the engine 100 by the capacity of the EGR passage 16. In this case, although the shut-off valve 163 may be provided in an arbitrary position in the EGR passage 16, it is possible to change the capacity of the exhaust system of the engine 100 more greatly by providing the shut-off valve 163 to the exhaust gas inlet portion of the EGR passage 16.

The shut-off valve 163 is an exemplary structure of an exhaust system capacity changing means of the present invention.

The atmospheric pressure sensor 44 detects the atmospheric pressure of the outside of the vehicle on which the engine 100 is mounted, and sends the result of detection to the engine ECU 10. Thus, the engine ECU 10 recognizes the atmospheric pressure of the outside of the vehicle.

The engine ECU 10 is a computer equipped with a CPU (Central Processing Unit) that carries out operations, a ROM (Read Only Memory) that stores programs and the like, a RAM (Random Access Memory) and an NVRAM (Non Volatile RAM), which RAMS store data and the like. The engine ECU 10 reads the results of detection by the multiple sensors arranged in portions of the engine 100, and integrally controls the operation of the engine 100 on the basis of the detection results.

Further, the engine ECU 10 carries out a control (internal EGR) of adjusting the hydraulic VVT mechanism 27, the shut-off valve 163 and the variable nozzle vane mechanism 141 in accordance with the operating condition of the engine 100 and introducing the exhaust gas into the combustion chamber of the engine 100. The control of the internal EGR carried out by the engine ECU 10 is described below.

First, the engine ECU 10 determines whether there is a request for execution of the internal EGR of the engine 100 on the basis of the received detection results of the water temperature sensor 42, the exhaust temperature sensor 43 and the atmospheric pressure sensor 44. More particularly, the engine ECU 10 determines that there is a request for execution of the internal EGR in a case where the temperature of the cooling water detected by the water temperature sensor 42 is lower than a predetermined temperature (for example, 50°C) that makes it possible to conclude that the engine 100 is in cold operation. Further, the engine ECU 10 determines that there is a request for execution of the internal EGR in a case where the temperature of the exhaust gas detected by the exhaust temperature sensor 43 is lower than a predetermined temperature (for example, 50 °C) that makes it possible to conclude that the exhaust gas is at low temperature. The engine ECU 10 determines that there is a request for execution of the internal EGR in a case where the atmospheric pressure of the outside detected by the atmospheric pressure sensor 44 is lower than a predetermined atmospheric (for example, 900 hPa) that makes it possible to conclude that the vehicle on which the engine 100 is mounted is in a high attitude.

For example, when the engine 100 is in cold operation or in a low power range, the temperature of the exhaust gas is relatively low, whereby introduction of the exhaust gas that passes through the EGR passage 16 and is cooled into the combustion chamber (external EGR) may lower the combustion temperature excessively and may degrade combustion performance. Also, in a case where the atmospheric pressure of the outside of the engine 100 is low, a smaller amount of oxygen than the normal amount is introduced into the combustion chamber, whereby introduction of the external EGR having a lower temperature into the combustion chamber may cause shortage of oxygen and may degrade combustion performance. Thus, in a case where the engine 100 is in operation ranges as described above, the exhaust gas in the previous cycle that is at relatively high temperature is introduced into the combustion chamber (internal EGR), so that the degradation of combustion performance can be suppressed and the amount of emission of NOx can be reduced. In this case, instead of the detection results of the exhaust temperature sensor 43, the engine ECU 10 may recognize the exhaust gas temperature of the engine 100 on the basis of the power of the engine 100 calculated by the detection results of the crank angle sensor 41.

When the engine ECU 10 determines that there is a request for execution of the internal EGR of the engine 100, the engine ECU 10 instructs the hydraulic VVT mechanism 27 to open the exhaust valve 23 of the engine 100 in the intake stroke in addition to the valve opening operation in the exhaust stroke, so that a portion of the exhaust gas that flows out to the exhaust side can be introduced into the combustion chamber.

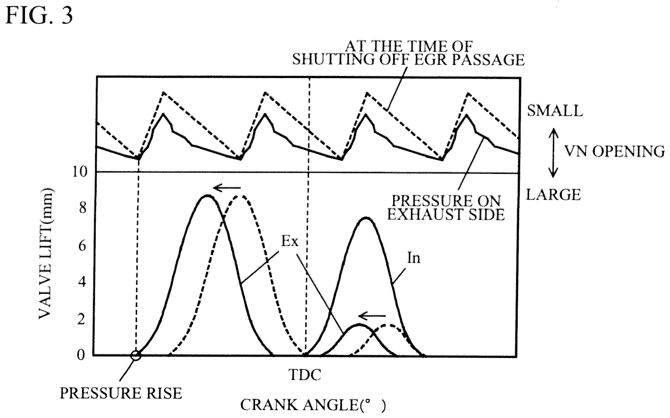

FIG. 3 indicates an exemplary pressure behavior and an exemplary valve lift on the exhaust side of the engine 100. FIG. 3 indicates a behavior of a four-cylinder engine as an example of the multi-cylinder engine. When the exhaust valve 23 is opened in the exhaust stroke of one of the cylinders of the engine 100, the exhaust gas is discharged from the combustion chamber to the exhaust side, and the temperature of the exhaust side rises. A pressure rise on the exhaust side takes place in the exhaust stroke in each cylinder, and causes exhaust pulsation in which the pressure on the exhaust side of the engine 100 varies periodically. When one of the cylinders of the engine 100 is in the intake stroke, the cylinder next after the one of the cylinders is in the exhaust stroke, and the pressure on the exhaust side rises. Thus, when the exhaust valve 23 is opened under the condition that one of the cylinders is in the intake stroke, a portion of the exhaust gas discharged to the exhaust side in the previous cycle flows into the combustion chamber due to high pressure on the exhaust side. As described above, by opening the exhaust valve 23 in the exhaust stroke of the engine 100, it is possible to introduce the exhaust gas in the previous cycle into the combustion chamber (internal EGR).

Subsequently, the engine ECU 10 determines whether the amount of exhaust gas actually introduced into the combustion chamber of the engine 100 (internal EGR) is smaller than a target introduction amount. In this case, a correlation map of the supercharging pressure and the amount of gas in the cylinder may be prepared for each output of the engine 100 and may be stored in the ROM of the engine ECU 10 beforehand, whereby it is possible to quickly and properly determine whether the amount of internal EGR actually introduced is smaller than the target introduction amount. When the engine ECU 10 determines that the amount of internal EGR actually introduced is not smaller than the target introduction amount (equal to or larger than the target introduction amount), the engine ECU 10 instructs the variable nozzle vane mechanism 141 to increase the opening, and thereby decreases the supercharging efficiency of the turbocharger 14. By this, the amount of exhaust gas that flows into the turbine impeller vanes is reduced, so that the resistance to the flow of the exhaust gas in the engine 100 can be reduced and the pressure on the exhaust side can be lowered. It is therefore possible to reduce the amount of the internal EGR introduced into the combustion chamber when the exhaust valve 23 is opened in the intake stroke.

The engine ECU 10 executes the control of keeping a greater opening of the variable nozzle vane mechanism 141 until the amount of internal EGR actually introduced reaches the target introduction amount.

In contrast, in a case where the engine ECU 10 determines that the amount of internal EGR actually introduced is smaller than the target introduction amount, the engine ECU 10 instructs the shut-off valve 163 to shut off the EGR passage 16 to reduce the capacity of the exhaust system of the engine 100.

A reduced capacity of the exhaust system of the engine 100 reduces the capacity of the passage through which the exhaust gas can pass, and thus increases the amplitude of exhaust pulsation (see FIG. 3). The increased amplitude of exhaust pulsation increases the amount of the internal EGR introduced into the combustion chamber when the exhaust valve 23 is opened in the intake stroke. Even when the EGR passage 16 is shut off while the engine 100 is in operation, the fuel economy is not degraded. It is therefore possible to increase the amount of the internal EGR introduced into the combustion chamber without degrading the fuel economy by shutting off the EGR passage 16 to thus reduce the capacity of the exhaust system.

After the EGR passage 16 is shut off by closing the shut-off valve 163, the engine ECU 10 determines whether the amount of internal EGR actually introduced into the combustion chamber of the engine 100 is smaller than the target introduction amount. When the engine ECU 10 determines that the amount of internal EGR actually introduced is smaller than the target introduction amount (equal to or larger than the target introduction amount), the engine ECU 10 instructs the variable nozzle vane mechanism 141 to increase the opening to thereby lower the supercharging efficiency of the turbocharger 14, as has been described previously.

In contrast, in a case where the engine ECU 10 determines that the amount of internal EGR actually introduced is smaller than the target introduction amount, the engine ECU 10 instructs the hydraulic VVT mechanism 27 to advance the opening or closing phase of the exhaust valve 23 (see FIG. 3).

The rise of pressure on the exhaust side of the engine 100 is determined by the engine speed and the opening timing of the exhaust valve, the pressure on the exhaust side becomes higher as the opening timing of the exhaust valve 23 is earlier for an identical engine speed. Thus, by setting the closing phase of the exhaust valve 23 in the exhaust stroke earlier than the present state, it is possible to increase the pressure on the exhaust side and increase the amount of internal EGR introduced in the combustion chamber when the exhaust valve 23 is opened in the intake stroke. Further, by advancing the angle of closing the exhaust valve 23, it is possible to confine the exhaust gas (internal EGR) in the combustion chamber and suppress the exhaust gas from flowing out to the exhaust side. The fuel economy is not degraded greatly by setting the phases of opening and closing the exhaust valve 23 earlier than the present states while the engine 100 is in operation. Thus, by advancing the phases of opening and closing the exhaust valve 23 from the present states, it is possible to suppress the degradation of fuel economy and increase the amount of exhaust gas introduced into the combustion chamber. In this case, the advanced phase angle of the exhaust valve 23 may be determined beforehand on the basis of a correlation map between the power of the engine 100 and the advanced angle amount created by a bench test or the like.

After the opening or closing phase of the exhaust valve 23 is advanced, the engine ECU 10 determines whether the amount of internal EGR actually introduced into the combustion chamber of the engine 100 is smaller than the target introduction amount. When the engine ECU 10 determines that the amount of internal EGR actually introduced is not smaller than the target introduction amount (equal to or larger than the target introduction amount), the engine ECU 10 instructs the variable nozzle vane mechanism 141 to increase the opening and thus reduce the supercharging efficiency of the turbocharger 14, as has been described previously.

In contrast, in a case where the engine ECU 10 determines that the amount of internal EGR actually introduced is smaller than the target introduction amount, the engine ECU 10 instructs the variable nozzle vane mechanism 141 to reduce the opening and thus improve the supercharging efficiency of the turbocharger 14.

A reduced opening of the variable nozzle vane mechanism 141 causes a larger amount of exhaust gas to flow in the turbine impeller vanes, whereby the resistance to the flow of the exhaust gas of the engine is increased and the pressure on the exhaust side is raised. It is thus possible to increase the amount of internal EGR introduced into the combustion chamber when the exhaust valve 23 is opened in the intake stroke. When the opening of the variable nozzle vane mechanism 141 is reduced while the engine 100 is in operation, the pumping loss is increased and the fuel economy is degraded. Since the present embodiment realizes a condition that the amount of internal EGR is increased and is close to the target introduction amount by the aforementioned two controls, it is possible to further reduce the degree of change of opening of the variable nozzle vane mechanism 141. That is, by executing the controls, the engine ECU 10 is capable of keeping the degradation of fuel economy of the engine 100 to a minimum and appropriately controlling the amount of exhaust gas introduced into the combustion chamber by the internal EGR.

The engine ECU 10 repeats the above control until the amount of internal EGR actually introduced into the combustion chamber reaches the target introduction amount.

The engine ECU 10 is an exemplary structure of variable valve means, phase changing means, exhaust system capacity changing means and supercharging efficiency control means.

As described above, the engine system 1 of the present embodiment adjusts the hydraulic VVT mechanism 27, the shut-off valve 163 and the variable nozzle vane mechanism 141 in accordance with the driving condition of the engine 100, and thereby controls the amount of internal EGR introduced into the combustion chamber of the engine 100 appropriately. When the amount of internal EGR introduced into the combustion chamber is smaller than the target introduction amount, the engine system 1 of the present embodiment executes control to shut off the EGR passage 16, which control has the smallest influence on the fuel economy, and thereby increases the amount of internal EGR introduced. Next, the engine system 1 executes control to advance the phase of the exhaust valve 23, which control has a small influence on the fuel economy, and thereafter, executes control to reduce the opening of the variable nozzle vane mechanism 141. That is, by preferentially executing the control that has a small influence on the fuel economy, it is possible to suppress the degradation of fuel economy of the engine 100 to a minimum and increase the amount of internal EGR introduced into the combustion chamber.

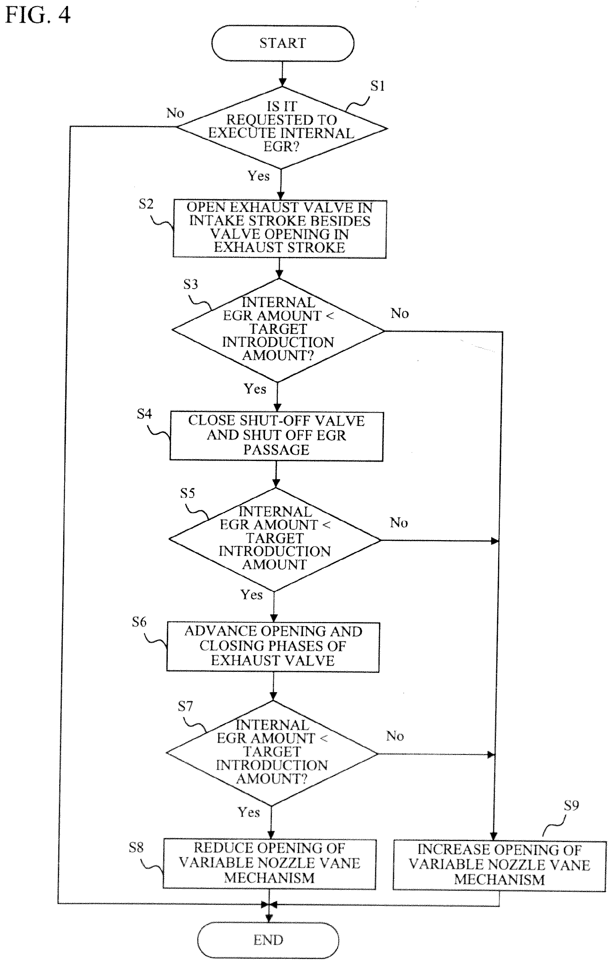

Next, a description is given of an operation of the engine system with reference to a control sequence of the engine ECU 10. FIG. 4 is a flowchart of an exemplary process of the engine ECU 10. The engine system 1 of the present embodiment is equipped with the hydraulic VVT mechanism 27, the shut-off valve 163 and the variable nozzle vane mechanism 141, and the engine ECU 10 executes control to adjust the hydraulic VVT mechanism 27, the shut-off valve 163 and the variable nozzle vane mechanism 141 in accordance with the operating condition of the engine 110 and to thereby adjust the amount of internal EGR introduced into the combustion chamber.

The control of the engine ECU 10 is initiated when the ignition switch is switched ON and the engine 100 is started, and the following control is repeatedly carried out while the engine 100 is in operation. Further, the engine ECU 10 always the results of detection by the water temperature sensor 42, the exhaust temperature sensor 43 and the atmospheric pressure sensor 44 while the control is being processed.

First, in step S1, the engine ECU 10 determines whether there is a request for execution of the internal EGR of the engine 100 on the basis of the received detection results of the water temperature sensor 42, the exhaust temperature sensor 43 and the atmospheric pressure sensor 44. Since the concrete method for determination has been described previously, a detailed description thereof is omitted here. When there is no request for execution of the internal EGR (step S1/NO), the engine ECU 10 ends the control process. When there is a request for execution of the internal EGR (step S1/YES), the engine ECU 10 proceeds to next step S2.

In step S2, the engine ECU 10 instructs the hydraulic VVT mechanism 27 to open the exhaust valve 23 of the engine 100 in the intake stroke besides the valve opening operation in the exhaust stroke, so that a portion of the exhaust gas discharged to the exhaust side can be introduced into the combustion chamber.

In step S3, the engine ECU 10 determines whether the amount of internal EGR actually introduced in the combustion chamber of the engine 100 is smaller than the target introduction amount. Since the concrete method for determination has been described previously, a detailed description is omitted here. When the amount of internal EGR actually introduced is not smaller than the target introduction amount (equal to or lager than the target introduction amount) (step S3/NO), the engine ECU 10 proceeds to step S9. When the amount of internal EGR actually introduced is smaller than the target introduction amount (step S3/YES), the engine ECU 10 proceeds to step S4.

In step S4, the engine ECU 10 instructs the shut-off valve 163 to shut off the EGR passage 16 to reduce the exhaust-system capacity of the engine 100 and increase the pressure on the exhaust side. After finishing the process of step S4, the engine ECU 10 proceeds to next step S5.

In step S5, the engine ECU 10 determines whether the amount of internal EGR actually introduced in the combustion chamber of the engine after the process of step S4 is smaller than the target introduction amount. When the amount of internal EGR actually introduced into the combustion chamber is not smaller than the target introduction amount (equal to or larger than the target introduction amount) (step S5/NO), the engine ECU 10 proceeds with step S9. When the amount of internal EGR actually introduced is smaller than the target introduction amount (step S5/YES), the engine ECU 10 proceeds to next step S6.

In step S6, the engine ECU 10 instructs the hydraulic VVT mechanism 27 to advance the angles of the phases of opening and closing the exhaust valve 23 from the current states, and thereby increases the pressure on the exhaust side while suppressing discharge of internal EGR from the combustion chamber. The engine ECU 10 ends the process of step S6, and proceeds to next step S7.

In step S7, the engine ECU 10 determines whether the amount of internal EGR introduced into the combustion chamber of the engine 100 after the process of step S6 is smaller than the target introduction amount. When the amount of internal EGR actually introduced is not smaller than the target introduction amount (equal to or larger than the target introduction amount) (step S7/NO), the engine ECU 10 proceeds to step S9. When the amount of internal EGR actually introduced is smaller than the target introduction amount (step S7/YES), the engine ECU proceeds to step S8.

In step S8, the engine ECU 10 instructs the variable nozzle vane mechanism 141 to reduce the opening and to thereby improve the supercharging efficiency of the turbocharger 14 and increase the pressure on the exhaust side. The engine ECU 10 ends the process after finishing the process of step S8.

When the determination result of step S3, S5 or S7 is NO, the engine ECU 10 proceeds to step S9. In step S9, the engine ECU 10 instructs the variable nozzle vane mechanism 141 to increase the opening and to thereby reduce the supercharging efficiency of the turbocharger 14 and reduce the pressure on the exhaust side. The engine ECU 10 ends the control process after finishing the process of step S9.

By executing the above control, it is possible to suppress the degradation of fuel economy of the engine 100 to a minimum and appropriately control the amount of internal EGR introduced into the combustion chamber.

As described above, the engine system of the present invention includes an engine ECU, a hydraulic VVT mechanism configured to be able to open an exhaust valve of an engine in an intake stroke besides a valve opening operation in an exhaust stroke and to change phases of opening and closing the exhaust valve, a shut-off valve capable of shutting off an EGR passage communicating with an exhaust manifold, and a variable nozzle vane mechanism controlling a supercharging efficiency of a turbocharger, and adjusts the hydraulic VVT mechanism, the shut-off valve and the variable nozzle vane mechanism on the basis of an operating condition of the engine, so that the amount of internal EGR introduced into a combustion chamber of the engine can be controlled appropriately.

Furthermore, the engine system of the present embodiment preferentially executes control that has a negative influence on the fuel economy in a case where the amount of internal EGR actually introduced into the combustion chamber is smaller than the target introduction amount, and is thus capable of suppressing the degradation of fuel economy to a minimum and increasing the amount of internal EGR into the combustion chamber.

### Embodiment 2

Then, an embodiment 2 of the present invention is described. An engine system 2 of the present embodiment differs from the engine system 1 in that the engine system 2 executes, in addition to the control of the embodiment 1, scavenging control to open the exhaust valve when the pressure on the exhaust side becomes lower than the pressure on the intake side in an operating range in which it is not requested to execute the internal EGR of the engine.

When the vehicle on which the engine 100 is mounted is accelerating or climbing, it is requested to increase the amount of intake air introduced into the combustion chamber in order to quickly increase power of the engine 100. In such an operating range, it is desirable to discharge burned gas (exhaust gas) to the exhaust side from the combustion chamber as much as possible. The engine system 2 of the present embodiment executes control to adjust the hydraulic VVT mechanism 27, the shut-off valve 163 and the variable nozzle vane mechanism 141 on the basis of the operating condition of the engine 100 and to thereby open the exhaust valve 23 at a timing when the pressure on the exhaust side becomes lower than the pressure on the intake side and scavenge the exhaust gas in the combustion chamber (scavenging control). Now, scavenging control executed by the engine ECU 10 is described.

First, the engine ECU 10 determines whether there is a request for execution of the scavenging control of the engine 100 on the basis of the received result of detection of the crank angle sensor 41. More specifically, the engine ECU 10 determines that there is a request for execution of the scavenging control in a case where the crank angle acceleration detected by the crank angle sensor 41 is equal to or larger than a predetermined angular acceleration that makes it possible to conclude that the vehicle with the engine 100 being mounted is in an accelerated state or a climbing state. In this case, the engine ECU 10 is not limited to the information sent from the crank angle sensor 41, but may determine a request for execution of scavenging control on the basis of another information such as information about an operation of the acceleration pedal by the driver.

When the engine ECU 10 determines that there is a request for execution of the scavenging control of the engine 100, the engine ECU 10 instructs the hydraulic VVT mechanism 27 to retard the closing phase of the exhaust valve 23 in the exhaust stroke of the engine 100 beyond the phase of the top dead center of the piston.

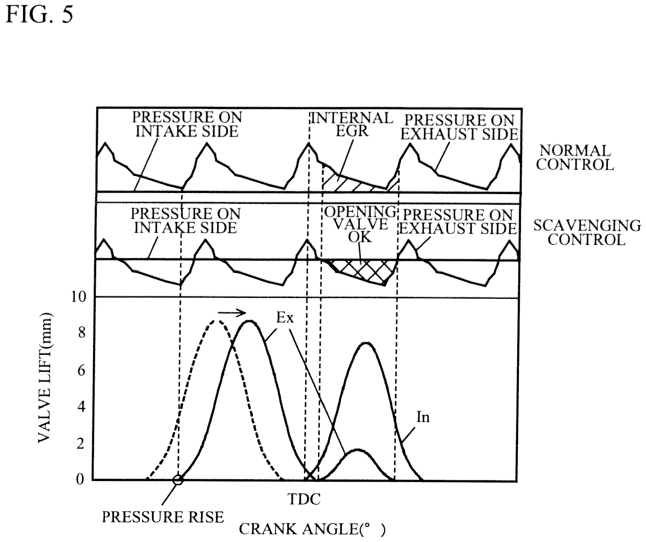

FIG. 5 indicates an exemplary pressure behavior and an exemplary valve lift on the exhaust side of the engine 100. FIG. 5 indicates a behavior of a four-cylinder engine as an example of the multi-cylinder engine. In the exhaust stroke of one of the cylinders of the engine 100, when the closing phase of the exhaust valve 23 advances beyond the top dead center of the piston, that is, when the exhaust valve 23 is opened while the piston is ascending, all of the exhaust gas (internal EGR) in the combustion chamber is not discharged but some exhaust gas remains. In contrast, when the closing phase of the exhaust valve 23 retards beyond the top dead center of the piston, that is, when the exhaust valve 23 is closed after the piston ascends completely, almost the exhaust gas (internal EGR) in the combustion chamber is discharged, and the remaining amount of internal EGR is small. As described above, it is possible to reduce the residue of exhaust gas (internal EGR) in the previous cycle by retarding the closing phase of the exhaust valve 23 in the exhaust stroke of the engine beyond the top dead center of the piston.

Then, the engine ECU instructs the shut-off valve 163 to shut off the EGR passage 16 and further reduce the exhaust-system capacity of the engine 100.

In the intake stroke of the engine 100, when the exhaust valve 23 is opened at a timing when the pressure on the exhaust side becomes lower than the pressure on the intake side (see FIG. 5), the exhaust gas that remains in the combustion chamber is discharged to the exhaust side by utilizing the difference in pressure between the exhaust side and the intake side. When the capacity of the exhaust system of the engine 100 is reduced, the capacity of the passage through which the exhaust gas passes is reduced, and the amplitude of exhaust pulsation is thus increased (see FIG. 3), whereby the supercharging efficiency of the turbocharger 14 is improved and the supercharging pressure is raised. Thus, the pressure on the intake side is raised, and a state in which the pressure on the exhaust side is lower than the pressure on the intake side occurs more frequency. It is thus possible to increase the number of times of execution of the scavenging control of the engine by shutting off the EGR passage 16 and reducing the capacity of the exhaust system.

Following the above control, the engine ECU 10 determines whether the scavenging control of the engine 100 is executable. More particularly, the engine ECU 10 determines that the scavenging control of the engine 100 is executable in a case where the pressure on the exhaust side is lower than the pressure on the intake side in the intake stroke of the engine 100. In this case, it is possible to quickly and appropriately determine whether the scavenging control is executable by referring to, for example, the difference in pressure between the intake pressure and the exhaust pressure and the amplitude of exhaust pulsation. When the engine ECU 10 determines that the scavenging control is executable, the engine ECU 10 instructs the hydraulic VVT mechanism 27 to open the exhaust valve 23 of the engine 100 in the intake stroke besides the valve opening operation in the exhaust stroke in order to execute the scavenging control (see FIG. 5). Thus, the exhaust gas (internal EGR) that remains in the combustion camber is discharged to the exhaust side by utilizing the pressure difference between the exhaust side and the intake side, whereby the amount of intake air introduced into the chamber of the engine 100 can be increased.

In contrast, in a case where the engine ECU 10 determines that the scavenging control is not executable (impossible), the engine ECU 10 determines whether the real supercharging pressure of the turbocharger 14 is higher than the target supercharging pressure by not less than a predetermined value. It is noted that the state in which the real supercharging pressure is higher than the target supercharging pressure by not less than the predetermined value is a state in which there is a sufficient room to reduce the real supercharging pressure of the turbocharger 14, that is, there is a sufficient room to reduce the pressure on the exhaust side of the engine 100.

The engine ECU 10 determines that there is not a sufficient room to reduce the pressure on the exhaust side in a case where the real supercharging pressure of the turbocharger 14 is not higher than the target supercharging pressure by not less than the predetermined value. Then, the engine ECU 10 determines that the execution of the scavenging control of the engine 100 is impossible, and terminates the control process.

In contrast, in a case where the real supercharging pressure of the turbocharger 14 is higher than the target supercharging pressure by not less than the predetermined value, the engine ECU 10 determines that there is a sufficient room to reduce the pressure on the exhaust side. Then, the engine ECU 10 instructs the variable nozzle vane mechanism 141 to increase the opening and thereby reduce the supercharging efficiency of the turbocharger 14. Thus, since the amount of exhaust gas that flows in the turbine impeller vanes is reduced, the resistance to the flow of exhaust gas of the engine 100 is reduced and the pressure on the exhaust side is reduced, whereby the pressure on the exhaust side becomes lower than the pressure on the intake side more frequently. Thus, the scavenging control of the engine 100 may be executed more frequently by further increasing the opening of the variable nozzle vane mechanism 141.

After the above control, the engine ECU 10 determines whether the scavenging control of the engine 100 is executable. When the engine ECU 10 determines that the scavenging control is executable, the engine ECU 10 instructs the hydraulic VVT mechanism 27 to open the exhaust valve 23 of the engine 100 in the intake stroke besides the valve opening operation in the exhaust stroke, whereby the exhaust gas (internal EGR) that remains in the combustion chamber is discharged to the exhaust side. When the engine ECU 10 determines that the execution of the scavenging control is impossible, the engine ECU 10 terminates the control process.

As described above, the engine system 2 of the present embodiment adjusts the hydraulic VVT mechanism 27, the shut-off valve 163 and the variable nozzle vane mechanism 141 on the basis of the operating condition of the engine 100, so that the exhaust valve 23 can be opened at a timing when the pressure on the exhaust side becomes lower than the pressure on the intake side. Thus, the exhaust gas (internal EGR) that remains in the combustion chamber can be appropriately discharged to the exhaust side by utilizing the pressure difference between the exhaust side and the intake side, and the amount of intake air introduced in the combustion chamber can be increased.

The engine system 2 of the present embodiment is capable of further increasing the opening of the variable nozzle vane mechanism 141 and thus reducing the pressure on the exhaust side in a case where the real supercharging pressure of the turbocharger 14 is higher than the target supercharging pressure by not less than the predetermined value. It is thus possible to make the pressure on the exhaust side lower than the pressure on the intake side more frequently and to execute the scavenging control of the engine 100 more frequently.

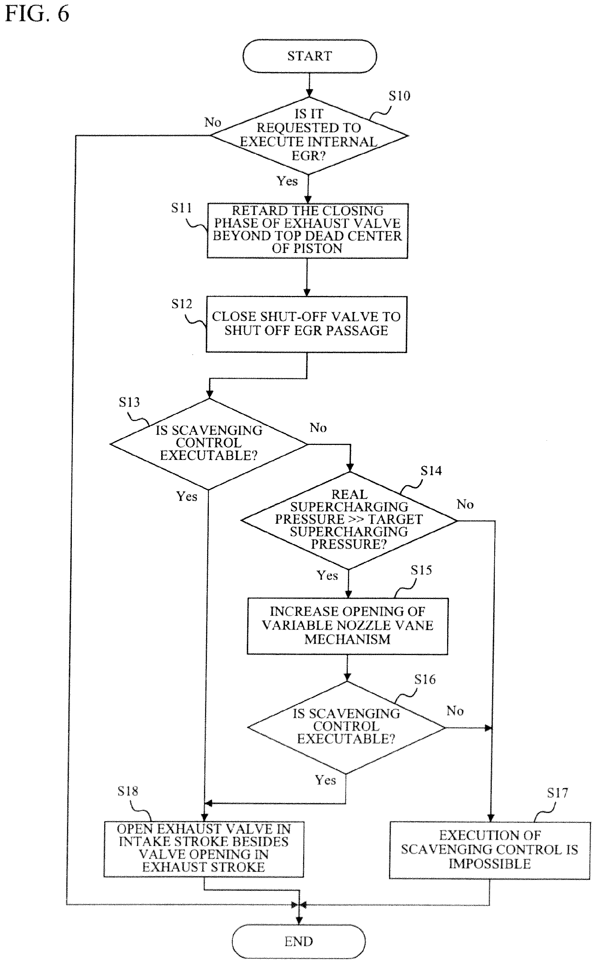

A description is now given of an operation of the engine system 2 in accordance with a flow of a control by the engine ECU 10. FIG. 6 is a flowchart of an example of the process of the engine ECU 10. The engine system 2 of the present embodiment is configured so that the engine ECU 10 executes a control (scavenging control) to adjust the hydraulic VVT mechanism 27, the shut-off valve 163 and the variable nozzle vane mechanism 141 on the basis of the operating condition of the engine 100 and to open the exhaust valve 23 at a timing when the pressure on the exhaust side becomes lower than the pressure on the intake side.

The control of the engine ECU 10 is initiated when the ignition switch is switched ON and the engine 100 is started, and the following control process is repeatedly carried out when the engine 100 is in operation. The engine ECU 10 always receives the results of detection by the crank angle sensor 41 while the control process is being performed.

First, in step S10, the engine ECU 10 determines whether there is a request for execution of the scavenging control of the engine 100 on the basis of the received detection results of the crank angle sensor 41. The concrete method for determination has been described previously, and a detailed description thereof is omitted here. When there is no request for execution of the scavenging control (step S10/NO), the engine ECU 10 ends the control process. When there is a request for execution of the scavenging control (step S10/YES), the engine ECU 10 proceeds to the next step S 11.

In step S11, the engine ECU 10 instructs the hydraulic VVT mechanism 27 to retard the closing phase of the exhaust valve 23 in the exhaust stroke of the engine 100 beyond the top dead point of the piston and to thus reduce the residue of the exhaust gas (internal EGR) in the combustion chamber. The engine ECU 10 proceeds to step S 12 after finishing the process of step S 11.

In step S12, the engine ECU 10 instructs the shut-off valve 163 to shut off the EGR passage 16 so as to further reduce the capacity of the exhaust system of the engine 100 and strengthen the exhaust pulsation, and thus raise the supercharging pressure of the turbocharger 14. The engine ECU 10 proceeds to step S13 after finishing the process of step S12.

In step S13, the engine ECU 10 determines whether the scavenging control of the engine 100 is executable. Since the concrete method for execution has been described previously, a detailed description thereof is omitted here. In a case where the scavenging control is executable (step S13/YES), the engine ECU 10 proceeds to step S18. In a case where the scavenging control is not executable (impossible) (step S13/NO), the engine ECU 10 proceeds to the next step S14.

In step S14, the engine ECU 10 determines whether the real supercharging pressure of the turbocharger 14 is higher than the target supercharging pressure by not less than the predetermined value. Since the state in which the real supercharging pressure is higher than the target supercharging pressure by not less than the predetermined value has described previously, a detailed description thereof is omitted. In a case where the real supercharging pressure is not larger than the target supercharging pressure by not less than the predetermined value (step S14/NO), the engine ECU 10 determines that there is no sufficient room to reduce the pressure on the exhaust side, and proceeds to step S17. In a case where the real supercharging pressure is larger than the target supercharging pressure by not less than predetermined value (step S14/YES), the engine ECU 10 determines that there is a sufficient room to reduce the pressure on the exhaust side, and proceeds to the next step S15,

In step S15, the engine ECU 10 instructs the variable nozzle vane mechanism 141 to increase the opening so as to reduce the supercharging efficiency of the turbocharger 14 and reduce the pressure on the exhaust side. The engine ECU 10 proceeds to the next step S16 after finishing the process of step S 15.

In step S16, the engine ECU 10 determines whether the scavenging control of the engine 100 is executable. In a case where the scavenging control is executable (step S16/YES), the engine ECU 10 proceeds to step S18. In a case where the scavenging control is not executable (impossible) (step 16/NO), the engine ECU 10 proceeds to the next step S17.

When the results of determinations in steps S 14 and S16 are NO, the engine ECU 10 proceeds to step S17. In step S 17, the engine ECU 10 determines that there is no timing when the pressure in the exhaust side is lower than the pressure in the intake side in the intake stroke of the engine 100, and ends the control.

When the results of determinations in steps S 13 and S 16 are YES, the engine ECU 10 proceeds to step S18. In step S18, the engine ECU 10 instructs the hydraulic VVT mechanism 27 to open the exhaust valve 23 of the engine 100 in the intake stroke besides the valve opening operation in the exhaust stroke so as to discharge the exhaust gas (internal EGR) that remains in the combustion chamber by utilizing the pressure difference between the exhaust side and the intake side. The engine ECU 10 ends the control process after finishing the process of step S18.

By executing this control, it is possible to discharge the exhaust gas (internal EGR) that remains in the combustion chamber to the exhaust side by utilizing the pressure difference between the exhaust side and the intake side. It is thus possible to increase the amount of intake air introduced into the combustion chamber.

As described above, the engine system of the present embodiment is configured so that the hydraulic VVT mechanism executes the control to retard the closing phase of the exhaust valve in the exhaust stroke beyond the phase of the top dead center of the piston and executes the control to shut off the EGR passage 16 by the shut-off valve. Then, the hydraulic VVT mechanism opens the exhaust value in the intake stroke besides in the valve opening operation in the intake stroke, so that the exhaust gas (internal EGR) that remains in the combustion chamber of the engine is discharged to the exhaust side by utilizing the pressure difference between the exhaust side and the intake side. It is thus possible to increase the amount of intake air introduced into the combustion chamber in an operation range in which it is not requested to execute the internal EGR of the engine 100.

Further, the engine system of the present embodiment is configured so that the hydraulic VVT mechanism executes the control of retarding the closing phase of the exhaust valve, and is capable of reducing the pressure on the exhaust side by reducing the supercharging efficiency of the turbocharger when the supercharging pressure of the turbocharger after execution of the control to shut off the EGR passage 16 by the shut-off valve is higher than the garget supercharging pressure by not less than the predetermined value. Thus, since a state in which the pressure on the exhaust side is lower than the pressure on the intake side occurs more frequency, it is possible to increase the number of times of execution of the scavenging control of the engine.

The above-described embodiments are just examples for carrying out the invention. The present invention is not limited to those but may be varied and changed within the scope of the claimed invention.

For example, means for changing the exhaust-system capacity of the internal combustion engine is not limited to the open/close control of the EGR passage. For example, a structure may be employed in which a sub chamber having a predetermined capacity is provided in the exhaust manifold, and the exhaust-system capacity is changed by controlling the communication between the exhaust manifold and the sub chamber. Another structure capable of changing the exhaust-system capacity may be employed.

### DESCRIPTION OF REFERENCE NUMERALS

- 1, 2: engine system
- 10: engine ECU (variable valve means, phase changing means, exhaust-system capacity changing means, supercharging efficiency control means)
- 13: exhaust manifold
- 14: turbocharger
- 16: EGR passage
- 23: exhaust valve
- 27: hydraulic VVT mechanism (variable valve means, phase changing means)
- 41: crank angle sensor
- 42: water temperature sensor
- 43: exhaust temperature sensor
- 44: atmospheric pressure sensor
- 100: engine (internal combustion engine)
- 141: variable nozzle vane mechanism (supercharging efficiency control means)
- 163: shut-off valve (exhaust-system capacity changing means)

## Claims

1. A control device of an internal combustion engine (100) comprising:
a variable valve means;
a phase changing means for changing phases of opening and closing the exhaust valve (23);
an exhaust-system capacity changing means capable of changing an exhaust-system capacity that is a sum of a capacity of an exhaust manifold (13) of the internal combustion engine (100) and a space communicating with the exhaust manifold (13); and
a supercharging efficiency control means for controlling a supercharging efficiency of a supercharger supercharging intake air by utilizing energy of exhaust gas of the internal combustion engine (100),
**characterized in that**
the variable valve means is capable of opening the exhaust valve (23) of an internal combustion engine (100) in an exhaust stroke besides a valve opening operation in an intake stroke and configured so as to execute a control to open the exhaust valve (23) of the internal combustion engine (100) in the intake stroke besides the valve opening operation in the exhaust stroke and to introduce, into the internal combustion chamber, a portion of the exhaust gas flowing out to an exhaust side of the internal combustion engine (100) from the combustion chamber, and
the exhaust-system capacity changing means is configured so as to reduce the exhaust-system capacity in a case where an amount of exhaust gas introduced into the combustion chamber by the control of the variable valve means is smaller than a target introduction amount.

2. The control device of the internal combustion engine (100) according to claim 1, **characterized in** being configured so that, in a case where the amount of exhaust gas introduced the combustion chamber after the control of the exhaust-system capacity changing means is executed is smaller than the target introduction amount, the phase changing means executes a control to advance phases of opening and closing the exhaust valve (23).

3. The control device of the internal combustion engine (100) according to claim 2, **characterized in** being configured so that, in a case where the amount of exhaust gas introduced into the combustion chamber after the control of the phase changing means is executed is smaller than the target introduction amount, the supercharging efficiency control means executes a control to improve the supercharging efficiency of the supercharger.

4. The control device of the internal combustion engine (100) according to any of claims 1 to 3, **characterized in** being configured so that, in a case where the amount of exhaust gas introduced into the combustion chamber by the control of the variable valve means exceeds the target introduction amount, the supercharging efficiency control means executes a control to reduce the supercharging efficiency of the supercharger.

5. The control device of the internal combustion engine (100) according to claim 1, **characterized in that** the phase changing means is configured so as to execute a control to retard a closing phase of the exhaust valve in an exhaust stroke of the internal combustion engine beyond a phase of a top dead center of a piston, and the exhaust-system capacity changing means is configured so as to execute a control to reduce the exhaust-system capacity in accordance with an operating condition of the internal combustion engine (100), and
after the control of the phase changing means and the exhaust-system capacity changing means are executed, the variable valve means executes a control to open the exhaust valve of the internal combustion engine in an intake stroke besides a valve opening operation in an exhaust stroke and to discharge exhaust gas that remains in the combustion chamber of the internal combustion engine (100) to the exhaust side.

6. The control device of the internal combustion engine (100) according to claim 5, **characterized in** being configured so that, in a case where the supercharging pressure of the supercharger after the control of the phase changing means and the control of the exhaust-system capacity changing means are executed is larger than a target supercharging pressure by not less than a predetermined value, the supercharging efficiency control means executes a control to reduce the supercharging efficiency of the supercharger.

7. The control device of the internal combustion engine (100) according to any of claims 1 to 6, **characterized by** further comprising an exhaust gas recirculation passage (16) that communicates an exhaust side at an upstream side of the supercharger and an intake side with each other and recirculates a portion of exhaust gas back to an intake passage; and
a shut-off valve (163) provided in the vicinity of an exhaust gas inlet portion of the exhaust gas recirculation passage(16),
the exhaust-system capacity changing means being configured for closing the shut-off valve (163) to reduce the exhaust-system capacity.

## Patentansprüche

1. Steuerungsvorrichtung eines Verbrennungsmotors (100), umfassend:
ein verstellbares Ventilmittel,
ein Phasenänderungsmittel zum Ändern von Phasen des Öffnens und Schließens des Abgasventils (23),
ein Abgasanlagenkapazitätsänderungsmittel, das in der Lage ist, eine Abgasanlagenkapazität zu ändern, die eine Summe einer Kapazität eines Abgassammelrohres (13) des Verbrennungsmotors (100) und eines Raumes, der mit dem Abgassammelrohr (13) in Strömungsverbindung steht, ist, und
ein Aufladungseffizienzsteuerungsmittel zum Steuern einer Aufladungseffizienz eines Laders, der Ansaugluft unter Nutzung von Energie aus Abgas des Verbrennungsmotors (100) verdichtet,
**dadurch gekennzeichnet, dass**
das verstellbare Ventilmittel in der Lage ist, das Abgasventil (23) eines Verbrennungsmotors (100) während eines Auslasshubes neben einem Ventilöffnungsbetrieb während eines Ansaughubes zu öffnen, und dafür konfiguriert ist, eine Steuerung auszuführen, bei der das Abgasventil (23) des Verbrennungsmotors (100) während des Ansaughubes neben einem Ventilöffnungsbetrieb während des Auslasshubes öffnet, und ein Teil des Abgases, das auf einer Auslassseite des Verbrennungsmotors (100) aus dem Brennraum ausströmt, in den Brennraum eingeleitet wird, und
das Abgasanlagenkapazitätsänderungsmittel so konfiguriert ist, dass die Abgasanlagenkapazität in einem Fall reduziert wird, wo ein Betrag von Abgas, das durch die Steuerung des verstellbaren Ventilmittels in den Brennraum eingeleitet wird, kleiner ist als ein Einleitungs-Sollbetrag.

2. Steuerungsvorrichtung des Verbrennungsmotors (100) nach Anspruch 1, **dadurch gekennzeichnet, dass** sie so konfiguriert ist, dass in einem Fall, wo der Betrag von Abgas, das in den Brennraum eingeleitet wird, nachdem die Steuerung des Abgasanlagenkapazitätsänderungsmittels ausgeführt wurde, kleiner ist als der Einleitungs-Sollbetrag, das Phasenänderungsmittel eine Steuerung ausführt, um Phasen des Öffnens und Schließens des Abgasventil (23) vorzuverlagern.

3. Steuerungsvorrichtung des Verbrennungsmotors (100) nach Anspruch 2, **dadurch gekennzeichnet, dass** sie so konfiguriert ist, dass in einem Fall, wo der Betrag von Abgas, das in den Brennraum eingeleitet wird, nachdem die Steuerung des Phasenänderungsmittels ausgeführt wurde, kleiner ist als der Einleitungs-Sollbetrag, das Aufladungseffizienzsteuerungsmittel eine Steuerung ausführt, um die Aufladungseffizienz des Laders zu verbessern.

4. Steuerungsvorrichtung des Verbrennungsmotors (100) nach einem der Ansprüche 1 bis 3, **dadurch gekennzeichnet, dass** sie so konfiguriert ist, dass in einem Fall, wo der Betrag von Abgas, das durch die Steuerung des verstellbaren Ventilmittels in den Brennraum eingeleitet wird, den Einleitungs-Sollbetrag übersteigt, das Aufladungseffizienzsteuerungsmittel eine Steuerung ausführt, um die Aufladungseffizienz des Laders zu reduzieren.

5. Steuerungsvorrichtung des Verbrennungsmotors (100) nach Anspruch 1, **dadurch gekennzeichnet, dass** das Phasenänderungsmittel so konfiguriert ist, dass es eine Steuerung ausführt, um eine Schließphase des Abgasventils während eines Auslasshubes des Verbrennungsmotors über eine Phase eines oberen Totpunktes eines Kolbens hinaus zu verzögern, und das Abgasanlagenkapazitätsänderungsmittel so konfiguriert ist, dass es eine Steuerung ausführt, um die Abgasanlagenkapazität gemäß einem Betriebszustand des Verbrennungsmotors (100) reduzieren, und
nachdem die Steuerung des Phasenänderungsmittels und des Abgasanlagenkapazitätsänderungsmittel ausgeführt wurden, das verstellbare Ventilmittel eine Steuerung ausführt, um das Abgasventil des Verbrennungsmotors während eines Ansaughubes neben einem Ventilöffnungsbetrieb während eines Auslasshubes zu öffnen und Abgas, das in dem Brennraum des Verbrennungsmotors (100) zurückbleibt, zur Auslassseite auszulassen.

6. Steuerungsvorrichtung des Verbrennungsmotors (100) nach Anspruch 5, **dadurch gekennzeichnet, dass** sie so konfiguriert ist, dass in einem Fall, wo der Ladedruck des Laders, nachdem die Steuerung des Phasenänderungsmittels und die Steuerung des Abgasanlagenkapazitätsänderungsmittels ausgeführt wurden, um nicht weniger als ein vorgegebener Wert größer ist als ein Soll-Ladedruck, das Aufladungseffizienzsteuerungsmittel eine Steuerung ausführt, um die Aufladungseffizienz des Laders zu reduzieren.

7. Steuerungsvorrichtung des Verbrennungsmotors (100) nach einem der Ansprüche 1 bis 6, **dadurch gekennzeichnet, dass** sie ferner umfasst:
einen Abgasrezirkulierungskanal (16), der eine Auslassseite auf einer stromaufwärtigen Seite des Laders und eine Einlassseite miteinander in Strömungsverbindung setzt und einen Teil von Abgas zurück in einen Einlasskanal rezirkuliert, und
ein Sperrventil (163), das in der Nähe eines Abgaseinlassabschnitts des Abgasrezirkulierungskanals (16) angeordnet ist,
das Abgasanlagenkapazitätsänderungsmittel dafür konfiguriert ist, das Sperrventil (163) zu schließen, um die Abgasanlagenkapazität zu reduzieren.

## Revendications

1. Dispositif de commande d'un moteur à combustion interne (100) comportant :
des moyens de soupape variable ;
des moyens de changement de phase destinés à changer des phases d'ouverture et de fermeture de la soupape d'échappement (23) ;
des moyens de changement de capacité de système d'échappement capables de changer une capacité de système d'échappement qui est une somme d'une capacité d'un collecteur d'échappement (13) du moteur à combustion interne (100) et d'un espace communiquant avec le collecteur d'échappement (13) ; et
des moyens de commande d'efficacité de suralimentation destinés à commander une efficacité de suralimentation d'air d'admission de suralimentation de dispositif de suralimentation en utilisant de l'énergie de gaz d'échappement du moteur à combustion interne (100),
**caractérisé en ce que**
les moyens de soupape variable sont capables d'ouvrir la soupape d'échappement (23) d'un moteur à combustion interne (100) dans une course d'échappement à côté d'une opération d'ouverture de soupape dans une course d'admission et configurés de façon à exécuter une commande pour ouvrir la soupape d'échappement (23) du moteur à combustion interne (100) dans la course d'admission à côté de l'opération d'ouverture de soupape dans la course d'échappement et pour introduire, dans la chambre de combustion interne, une partie du gaz d'échappement s'écoulant hors d'un côté d'échappement du moteur à combustion interne (100) de la chambre de combustion, et
les moyens de changement de capacité de système d'échappement sont configurés de façon à réduire la capacité de système d'échappement dans un cas où une quantité de gaz d'échappement introduite dans la chambre de combustion par la commande des moyens de soupape variable est plus petite qu'une quantité d'introduction ciblée.

2. Dispositif de commande du moteur à combustion interne (100) selon la revendication 1, **caractérisé en ce qu'**il est configuré de telle sorte que, dans un cas où la quantité de gaz d'échappement introduite dans la chambre de combustion une fois que la commande des moyens de changement de capacité de système d'échappement est exécutée est plus petite que la quantité d'introduction ciblée, les moyens de changement de phase exécutent une commande pour avancer des phases d'ouverture et de fermeture de la soupape d'échappement (23).

3. Dispositif de commande du moteur à combustion interne (100) selon la revendication 2, **caractérisé en ce qu'**il est configuré de telle sorte que, dans un cas où la quantité de gaz d'échappement introduite dans la chambre de combustion une fois que la commande des moyens de changement de phase est exécutée est plus petite que la quantité d'introduction ciblée, les moyens de commande d'efficacité de suralimentation exécutent une commande pour améliorer l'efficacité de suralimentation du dispositif de suralimentation.

4. Dispositif de commande du moteur à combustion interne (100) selon l'une quelconque des revendications 1 à 3, **caractérisé en ce qu'**il est configuré de telle sorte que, dans un cas où la quantité de gaz d'échappement introduite dans la chambre de combustion par la commande des moyens de soupape variable dépasse la quantité d'introduction ciblée, les moyens de commande d'efficacité de suralimentation exécutent une commande pour réduire l'efficacité de suralimentation du dispositif de suralimentation.

5. Dispositif de commande du moteur à combustion interne (100) selon la revendication 1, **caractérisé en ce que** les moyens de changement de phase sont configurés de façon à exécuter une commande pour retarder une phase de fermeture de la soupape d'échappement dans une course d'échappement du moteur à combustion interne au-delà d'une phase d'un point mort haut d'un piston, et les moyens de changement de capacité de système d'échappement sont configurés de façon à exécuter une commande pour réduire la capacité de système d'échappement en fonction d'une condition de fonctionnement du moteur à combustion interne (100), et
une fois que la commande des moyens de changement de phase et des moyens de changement de capacité de système d'échappement est exécutée, les moyens de soupape variable exécutent une commande pour ouvrir la soupape d'échappement du moteur à combustion interne dans une course d'admission en plus d'une opération d'ouverture de soupape dans une course d'échappement et pour refouler du gaz d'échappement qui reste dans la chambre de combustion du moteur à combustion interne (100) vers le côté d'échappement.

6. Dispositif de commande du moteur à combustion interne (100) selon la revendication 5, **caractérisé en ce qu'**il est configuré de telle sorte que, dans un cas où la pression de suralimentation du dispositif de suralimentation une fois que la commande des moyens de changement de phase et la commande des moyens de changement de capacité de système d'échappement sont exécutées est plus grande qu'une pression de suralimentation ciblée de pas moins d'une valeur prédéterminée, les moyens de commande d'efficacité de suralimentation exécutent une commande pour réduire l'efficacité de suralimentation du dispositif de suralimentation.

7. Dispositif de commande du moteur à combustion interne (100) selon l'une quelconque des revendications 1 à 6, **caractérisé en ce qu'**il comporte en outre un passage de recyclage de gaz d'échappement (16) qui fait communiquer l'un avec l'autre un côté d'échappement sur un côté amont du dispositif de suralimentation et un côté d'admission et recycle une partie de gaz d'échappement vers un passage d'admission ; et
une soupape de coupure (163) prévue au voisinage d'une partie d'entrée de gaz d'échappement du passage de recyclage de gaz d'échappement (16),
les moyens de changement de capacité de système d'échappement étant configurés pour fermer la soupape de coupure (163) pour réduire la capacité de système d'échappement.
